## Europäisches Patentamt

## European Patent Office

## Office européen des brevets

(19)

(11) Numéro de publication: **0 272 947**
**B1**

(12) **FASCICULE DE BREVET EUROPEEN**

(45) Date de publication du fascicule du brevet:
**27.09.89**

(51) Int. Cl.⁴: **B62M 25/04**

(21) Numéro de dépôt: **87402453.2**

(22) Date de dépôt: **30.10.87**

(54) Dispositif perfectionné de commande à indexation pour dérailleur de cycle.

(30) Priorité: **27.11.86 FR 8616568**

(43) Date de publication de la demande:
**29.06.88 Bulletin 88/26**

(45) Mention de la délivrance du brevet:
**27.09.89 Bulletin 89/39**

(84) Etats contractants désignés:
**BE DE GB IT LU NL**

(56) Documents cités:
**EP-A- 0 157 983**
**FR-A- 2 551 569**
**FR-A- 2 578 507**
**FR-A- 2 579 163**

(73) Titulaire: **SACHS INDUSTRIES S.A. (HURET ET MAILLARD REUNIS), 60 Avenue Félix-Faure, F-92000 Nanterre(FR)**

(72) Inventeur: **Sinoquet, Régis, 29, rue de Fauquières Saucourt, F-80390- Fressenneville(FR)**

(74) Mandataire: **Bressand, Georges et al, c/o CABINET LAVOIX 2 Place d'Estienne d'Orves, F-75441 Paris Cédex 09(FR)**

ACTORUM AG

**Description**

La présente invention concerne un dispositif de commande pour dérailleur de cycle.

On connait dans l'état de la technique de nombreux dispositifs de commande pour dérailleurs de cycles, comprenant un support destiné à être fixé sur une partie du cadre ou du guidon du cycle et sur lequel est montée à rotation une manette de commande reliée à une extrémité d'un câble d'actionnement, dont l'autre extrémité est reliée au dérailleur.

Il existe deux grandes types de dispositifs de commande, les uns étant munis de moyens de friction disposés entre la manette et le support et les autres étant munis de moyens d'indexation entre ces éléments. Ces moyens d'indexation comportent des crans ou moyens équivalents qui permettent de déterminer avec précision différentes positions de la manette, correspondant à l'établissement des différents rapports de transmission. Un tel dispositif est connu du FR-A 2 579 163 qui illustre le préambule de la revendication 1. Ces positions indexées sont déterminées en fonction de différents paramètres et notamment du pas entre les pignons de la roue libre, ce qui fait que lorsqu'on monte une roue libre dont les pignons présentent un pas différent de celui prévu à l'origine, les moyens d'indexation d'un tel dispositif de commande sont inutilisables.

On a donc proposé un troisième type de dispositifs de commande , qui est une combinaison des deux types mentionnés précédemment. Ces dispositifs permettent à un utilisateur de sélectionner à volonté le fonctionnement de la manette, soit avec indexation des différents rapports, soit avec friction.

On a cependant abouti à des ensembles relativement complexes, cette complexité pouvant se traduire par un défaut de fiabilité et par un coût relativement élevé.

Le but de l'invention est donc de résoudre les problèmes mentionnés précédemment, en proposant un dispositif de commande pour dérailleur de cycle, qui soit simple, fiable, d'un prix de revient peu élevé et qui soit facilement adaptable à des roues libres dont les pignons présentent des pas différents.

A cet effet, l'invention a pour objet un dispositif de commande pour dérailleur de cycle, comportant un support adapté pour être fixé sur une partie du cadre ou du guidon du cycle, une manette de commande, mobile en rotation autour de l'axe du support, un câble d'actionnement accroché sur ladite manette et reçu dans une gorge de celle-ci et des premiers moyens d'indexation, déterminant des positions indexées de la manette par rapport au support, caractérisé en ce qu'il comporte des moyens de réglage de la distance radiale entre le fond d'au moins une portion de la gorge et l'axe du support.

Avantageusement, les moyens de réglage comprennent un mandrin interposé entre le support et la manette, solidaire en rotation de la manette, et comportant au moins une partie en saillie, de section transversale variable, adaptée pour s'engager dans un évidement correspondant ménagé dans la manette, et dans lequel débouche la gorge, pour constituer le fond de ladite portion réglable de la gorge, ledit mandrin étant monté déplaçable axialement par rapport au support, sous l'action d'un bouton de commande, pour régler la distance radiale entre le fond de ladite portion de gorge et l'axe du support.

L'invention sera mieux comprise à l'aide de la description qui va suivre, donnée uniquement à titre d'exemple et faite en se référant aux dessins annexés, sur lesquels:

- les Fig.1a et 1b représentent des demi-vues en coupe d'un dispositif de commande selon l'invention, dans lesquelles un mandrin entrant dans la constitution d'un dispositif selon l'invention, est représenté dans ses deux positions extrêmes; et

- la Fig. 2 représente une vue en perspective d'une manette de commande et d'un mandrin entrant dans la constitution d'un dispositif selon l'invention.

On a représenté aux dessins, une partie d'un tube 1 de cadre ou de guidon d'un cycle. Sur ce tube est fixé par tout moyen convenable, un support qui, dans l'exemple représenté, comporte un plot 2 brasé sur le tube et comprenant une embase 3 et une partie cylindrique 4 munie le cas échéant, de méplats.

Sur ce plot est fixé au moyen d'une vis 5 coopérant avec un filetage interne 4a du plot, un organe intermédiaire 6 qui constitue une sorte d'adaptateur entre le plot brasé et le reste du dispositif. Cet organe intermédiaire épouse à sa base la forme du tube et délimite une surface externe cylindrique 7 servant de guidage pour une manette de commande 8. Cette dernière, qui n'est représentée qu'en partie sur le dessin, est constituée, comme à l'habitude, d'un levier, monté rotatif autour de l'axe X-X du support, et sur lequel est accrochée l'extrémité d'un câble 9 d'actionnement du dérailleur.

A cet effet, la manette 8 comporte une gorge 10 de réception et d'enroulement d'une portion de ce câble.

Le dispositif de commande selon l'invention est également muni de premiers moyens d'indexation 11 permettant, comme mentionné précédemment, de déterminer avec précision différentes positions de la manette, par rapport au support, correspondant à l'établissement de différents rapports de transmission. Pour permettre à un utilisateur d'adapter ce dispositif au pas séparant les pignons de la roue libre, le dispositif selon l'invention comporte également des moyens de réglage 12 de la distance radiale entre le fond d'au moins une portion de la gorge 10 et l'axe X-X du support.

Ces moyens de réglage comprennent avantageusement un mandrin 13 interposé entre le support et la manette 8 et comportant au moins une partie en saillie 14, de section transversale variable, par exemple en forme de rampe, s'étendant parallèlement à l'axe X-X du support, et adaptée pour s'engager dans un évidement correspondant 15 ménagé dans la manette, et dans lequel débouche la gorge 10, pour constituer le fond de la portion réglable de la gorge. Ce mandrin est ainsi solidaire en rotation de la manette mais est monté déplaçable axialement par rapport à celle-ci, sous l'action d'un bouton de commande 16, pour régler cette distance radiale.

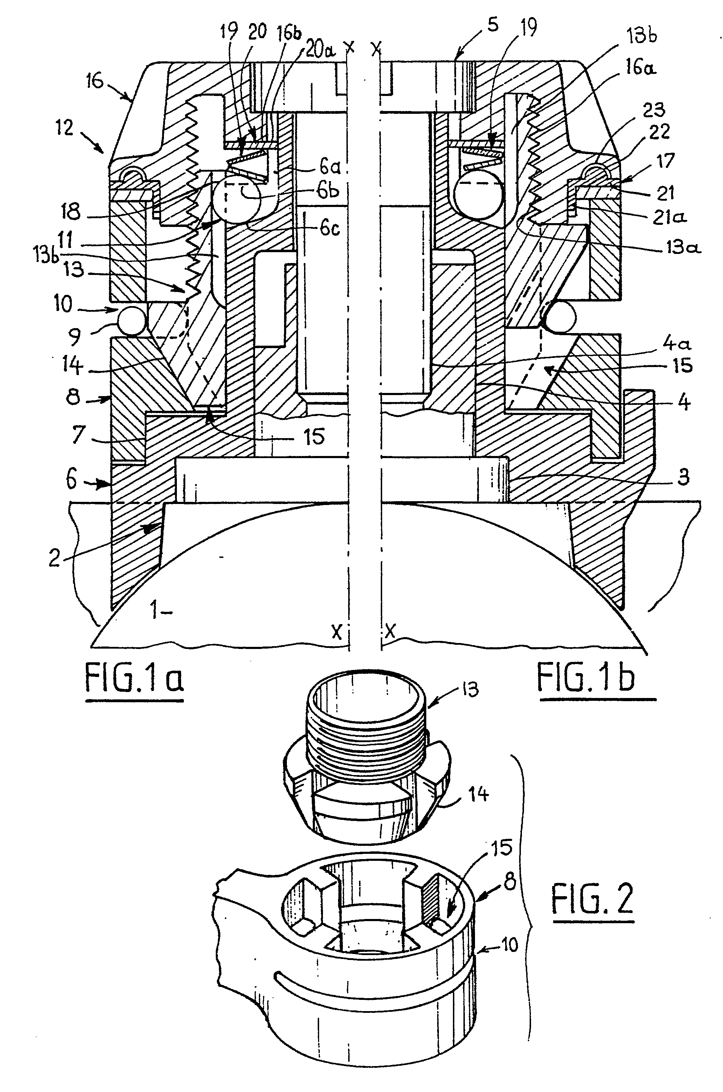

Comme on peut le voir en particulier sur la Fig.2, le mandrin 13 comporte par exemple quatre parties en saillie 14 disposées à 90° les unes par rapport aux autres et destinées à coopérer avec quatre évidements correspondants 15 de la manette 8.

Ainsi que cela est illustré sur les Fig.1a et 1b, ce mandrin est monté déplaçable le long d'une course de réglage entre une première et une seconde positions pour régler la distance radiale entre le fond de cette portion de gorge 10 et l'axe X-X du support. Ceci se traduit au niveau de la commande du dérailleur par une longueur de câble enroulée ou déroulée plus ou moins importante, entre les positions indexées, déterminées par les premiers moyens d'indexation 11, pour adapter le dispositif au pas séparant les pignons de la roue libre utilisée.

Le bouton de commande 16 est monté mobile en rotation par rapport au support et comporte une portion taraudée 16a adaptée pour coopérer avec une portion filetée 13a du mandrin en vue du déplacement de celui-ci, et plus particulièrement de la ou de chaque partie en saillie 14 de ce mandrin, par rapport à la gorge 10 de la manette.

Il est également à noter que des seconds moyens d'indexation 17 sont prévus entre le bouton de commande 16 et la manette 8. Ces moyens seront décrits plus en détail par la suite.

Les premiers moyens d'indexation 11 comprennent, par exemple, au moins une bille 18 disposée dans une rainure 6a du support et plus particulièrement de l'organe intermédiaire 6. Cette rainure comporte des bords d'arrêt 6b destinés à maintenir la bille dans la rainure et est parallèle à l'axe X-X du support.

La bille est sillicitée, par des moyens élastiques 19, en direction du mandrin 13 et est adaptée pour coopérer avec des rainures correspondantes, par exemple 13b, de celui-ci, pour déterminer les positions indexées de la manette par rapport au support. Avantageusement, les moyens d'indexation comprennent deux billes diamètralement opposées.

Les rainures 13b du mandrin sont ménagées sur la surface interne de celui-ci, parallèlement à l'axe X-X du support, à une distance déterminée les unes des autres, définissant ainsi des positions indexées permettant d'établir les différents rapports de transmission. L'une des extrémités des ou de chacun des moyens élastiques 19, constitués par exemple par des rondelles élastiques de type Belleville, est en appui sur une rondelle 20 elle-même en appui sur une surface de portée 16b du bouton de commande 16. Avantageusement, la rondelle 20 comporte au moins une partie en saillie 20a s'étendant dans la rainure 6a du support pour bloquer celle-ci en rotation mais permettre son déplacement parallèlement à l'axe X-X du support.

L'autre extrémité des moyens élastiques 19 est en appui sur la bille 18 et la paroi 6c de la rainure 6a du support, opposée à ces moyens élastiques, est inclinée et se présente sous la forme d'une rampe de guidage de la bille vers le mandrin 13. le mandrin étant solidaire en rotation de la manette et le support étant fixe, les positions indexées de la manette sont donc déterminées lorsque la bille 18 vient en butée contre le fond d'une rainure 13b du mandrin, comme cela est représenté sur la Fig.1a. Lors des déplacements de la manette (Fig.1b), la bille est repoussée dans la rainure 6a du support par les rebords de la rainure 13b, à l'encontre des moyens élastiques 19, jusqu'à ce que la bille puisse s'engager dans une autre rainure du mandrin, déterminant ainsi une nouvelle position indexée de la manette par rapport à ce support.

Pour permettre un positionnement précis du mandrin et particulièrement de la ou de chaque partie en saillie de celui-ci par rapport à la gorge de la manette, et ainsi régler avec précision la longueur de câble enroulée ou déroulée entre les positions indexées, les seconds moyens d'indexation 17 déterminent des positions indexées du bouton de commande 16 par rapport à cette manette. Ces moyens d'indexation 17 comprennent avantageusement une rondelle 21 disposée entre la manette et le bouton de commande. Cette rondelle comporte au moins un rebord 21a la rendant solidaire en rotation de la manette et au moins un bossage élastique 22, adapté pour coopérer avec des évidements correspondants, par exemple 23, du bouton de commande, pour déterminer des positions indexées du bouton par rapport à la manette.

Ceci permet à l'utilisateur d'adapter très facilement le dispositif de commande à des roues libres dont les pignons présentent des pas différents.

## Revendications

1. Dispositif de commande pour dérailleur de cycle, comportant un support (2,6) adapté pour être fixé sur une partie (1) du cadre ou du guidon du cycle, une manette (8) de commande, mobile en rotation par rapport au support, autour d'un axe (X-X), un câble d'actionnement (9) accroché sur ladite manette (8) et reçu dans une gorge (10) de celle-ci et des premiers moyens d'indexation (11), déterminant des positions indexées de la manette (8) par rapport au support (2,6), caractérisé en ce qu'il comporte des moyens de réglage (12) de la distance radiale entre le fond d'au moins une portion de la gorge (10) et l'axe (X-X) du support (2, 6).

2. Dispositif selon la revendication 1, caractérisé en ce que lesdits moyens de réglage (12) comprennent un mandrin (13) interposé entre le support (2,6) et la manette (8), solidaire en rotation de la manette, et comportant au moins une partie en saillie (14), de section transversale variable, adaptée pour s'engager dans un évidement correspondant (15) ménagé dans la manette, et dans lequel débouche la gorge (10), pour constituer le fond de ladite portion réglable de la gorge, ledit mandrin (13) étant monté déplaçable axialement par rapport au support, sous l'action d'un bouton de commande (16), pour régler la distance radiale entre le fond de ladite portion de gorge et l'axe du support.

3. Dispositif selon la revendication 2, caractérisé en ce que le mandrin (13) comporte quatre parties en saillie disposées à 90° les unes par rapport aux autres et destinées à coopérer avec quatre évidements correspondants de la manette (8).

4. Dispositif selon la revendication 2 ou 3, caractérisé en ce que ledit bouton de commande (16) est mobile en rotation par rapport au support (2,6) et en ce que ledit mandrin (13) comporte au moins une portion filetée (13a) adaptée pour coopérer avec une portion taraudée (16a) du bouton de commande (16), en vue de son déplacement par rapport à la gorge (10) de la manette (8).

5. Dispositif selon l'une quelconque des revendications 2 à 4, caractérisé en ce que des seconds moyens d'indexation (17) sont prévus entre le bouton de commande et la manette.

6. Dispositif selon l'une quelconque des revendications précédentes, caractérisé en ce que les premiers moyens d'indexation (11) comprennent au moins une bille (18) disposée dans une rainure (6a) du support (2,6), parallèle à l'axe (X-X) de celui-ci, sollicitée par des moyens élastiques (19) en direction du mandrin (13), et adaptée pour coopérer avec des rainures correspondantes (13b) de celui-ci pour déterminer les positions indexées de la manette (8) par rapport au support (2,6).

7. Dispositif selon la revendication 6, caractérisé en ce que lesdits premiers moyens d'indexation (11) comprennent deux billes diamétralement opposées.

8. Dispositif selon la revendication 6 ou 7, caractérisé en ce que l'une des extrémités des ou de chacun des moyens élastiques (19) est en appui sur une rondelle (20), déplaçable parallèlement à l'axe (X-X) du support (2,6), et elle-même en appui contre une surface de portée (16b) du bouton de commande, et l'autre extrémité, sur la ou chaque bille (18) et en ce que la paroi (6c) de la ou de chaque rainure (6a) du support, opposée aux moyens élastiques (19), se présente sous la forme d'une rampe de guidage de la bille (18) vers le mandrin.

9. Dispositif selon l'une quelconque des revendications 5 à 8, caractérisé en ce que lesdits seconds moyens d'indexation (17) comprennent une rondelle (21) disposée entre la manette (8) et le bouton de commande (16), solidaire en rotation de la manette, et comportant au moins un bossage élastique (22), adapté pour coopérer avec des évidements correspondants (23) du bouton de commande (16), pour déterminer des positions indexées du bouton de commande par rapport à la manette, et donc des positions précises du mandrin par rapport à la gorge de la manette.

10. Dispositif selon l'une quelconque des revendications 2 à 9, caractérisé en ce que la ou chaque partie en saillie (14) du mandrin (13) se présente sous la forme d'une rampe.

11. Dispositif selon l'une quelconque des revendications 6 à 10, caractérisé en ce que le support comporte un plot (2) solidaire de ladite partie (1) du cadre ou du guidon du cycle et sur lequel est fixé un organe intermédiaire (6), dans lequel est ménagée la ou chaque rainure (6a) du support.

## Patentansprüche

1. Betätigungsvorrichtung für eine Fahrradgangschaltung mit einem an einem Teil (1) des Fahrradrahmens oder -lenkers befestigbaren Träger (2, 6), mit einem Bedienungshebel (8), der relativ zu dem Träger um eine Achse (X-X) drehbar ist, mit einem Betätigungsseil (9), das an dem Bedienungshebel (8) eingehakt und in einer Kehle (19) desselben aufgenommen ist, sowie mit ersten Rastmitteln (11), die Raststellungen des Bedienungshebels (8) relativ zu dem Träger (2, 6) bestimmen, dadurch gekennzeichnet, daß Einstellmittel (12) vorgesehen sind, mit denen der radiale Abstand zwischen dem Boden der Kehle (10) und der Achse (X-X) des Trägers (2, 6) in wenigstens einem Teilbereich der Kehle einstellbar ist.

2. Vorrichtung nach Anspruch 1, dadurch gekennzeichnet, daß die Einstellmittel (12) eine Hülse (13) umfassen, die zwischen dem Träger (2, 6) und dem Bedienungshebel (8) angeordnet und mit dem Bedienungshebel drehfest verbunden ist und die wenigstens einen vorstehenden Teil (14) mit variablem Querschnitt aufweist, der in eine in dem Bedienungshebel angebrachte korrespondierende Ausnehmung (15) eingreifen kann, in der die Kehle (10) mündet, und der den Boden des einstellbaren Teilbereichs der Kehle bildet, und daß die Hülse (13) so montiert ist, daß sie zur Einstellung des radialen Abstands zwischen dem Boden des genannten Teilbereichs der Kehle und der Achse (X-X) des Trägers durch einen Bedienungsknopf (16) axial verschiebbar ist.

3. Vorrichtung nach Anspruch 2, dadurch gekennzeichnet, daß die Hülse (13) vier der vorstehenden Teile aufweist, die um 90° gegeneinander versetzt angeordnet sind und mit vier korrespondierenden Ausnehmungen des Bedienungshebels (8) zusammenwirken können.

4. Vorrichtung nach Anspruch 2 oder 3, dadurch gekennzeichnet, daß der Bedienungsknopf (16) relativ zu dem Träger (2, 6) drehbar ist und daß die Hülse (13) wenigstens einen Gewindeabschnitt (13a) aufweist, der mit einem korrespondierenden Gewindeteil (16a) des Bedienungsknopfes (16) zusammenwirken kann, wodurch die Hülse (13) relativ zu der Kehle (19) des Bedienungshebels (8) verschiebbar ist.

5. Vorrichtung nach einem der Ansprüche 2 bis 4, dadurch gekennzeichnet, daß zwischen dem Bedienungsknopf und dem Bedienungshebel zweite Rastmittel (17) vorgesehen sind.

6. Vorrichtung nach einem der vorhergehenden Ansprüche, dadurch gekennzeichnet, daß die ersten Rastmittel (11) wenigstens eine Kugel (18) umfassen, die in einer Nut (6a) des Trägers (2, 6) angeordnet ist, die parallel zu dessen Achse (X-X) verläuft, und daß die Kugel (18) durch elastische Mittel (19) in Richtung auf die Hülse (13) vorgespannt ist und mit in dieser angebrachten korrespondierenden Nuten (13b) zusammenwirkt und dadurch die Rastpositionen des Bedienungshebels (8) relativ zu dem Träger (2, 6) bestimmt.

7. Vorrichtung nach Anspruch 6, dadurch gekennzeichnet, daß die ersten Rastmittel (11) zwei Kugeln umfassen, die einander diametral gegenüberliegen.

8. Vorrichtung nach Anspruch 6 oder 7, dadurch gekennzeichnet, daß eines der Enden der oder jedes der elastischen Mittel (1) sich gegen eine parallel zur Achse (X-X) des Trägers (2, 6) verschiebbare Scheibe (20) abstützt, die sich ihrerseits gegen eine Lagerfläche (16b) des Bedienungsknopfes (16) abstützt, während das andere Ende der oder jedes der elastischen Mittel sich auf der oder jeder Kugel (18) abstützt, und daß die den elastischen Mitteln gegenüberliegende Wandung der oder jeder Nut (6a) des Trägers eine Rampe zur Führung der Kugel (18) in Richtung auf die Hülse bildet.

9. Vorrichtung nach einem der Ansprüche 5 bis 8, dadurch gekennzeichnet, daß die zweiten Rastmittel (17) eine zwischen dem Bedienungshebel (8) und dem Bedienungsknopf (16) angeordnete Scheibe (21) umfassen, die wenigstens einen elastischen Vorsprung aufweist, der mit korrespondierenden Vertiefungen (23) des Bedienungsknopfs (16) zusammenwirken kann, um Raststellungen des Bedienungsknopf relativ zu dem Bedienungshebel und damit genaue Stellungen der Hülse relativ zu der Kehle des Bedienungshebels zu bestimmen.

10. Vorrichtung nach einem der vorhergehenden Ansprüche, dadurch gekennzeichnet, daß der oder jeder vorstehende Teil (14) der Hülse (13) die Form einer Rampe hat.

11. Vorrichtung nach einem der Ansprüche 8 bis 10, dadurch gekennzeichnet, daß der Träger einen mit dem Teil (1) des Fahrradrahmens oder -lenkers fest verbundenen Stützzapfen (2) aufweist, auf dem ein Zwischenteil (6) befestigt ist, in dem die Nut bzw. die Nuten (6a) des Trägers angebracht sind.

## Claims

1. Control device for cycle derailleur, comprising a support (2, 6) adapted to be fixed on a part (1) of the cycle frame or handle-bar, a control lever (8) movable in rotation in relation to the support about an axis (X-X), an operating cable (9) hooked to the said control lever (8) and received in a groove (10) of the latter and first indexing means (11) determining indexed positions of the lever (8) in relation to the support (2, 6), characterised in that it comprises means (12) for regulation of the radial distance between the bottom of at least one portion of the groove (10) and the axis (X-X) of the support (2, 6).

2. Device according to Claim 1, characterised in that the said regulating means (12) comprise a holder piece (13) interposed between the support (2, 6) and the lever (8), fast in rotation with the lever and comprising at least one protruding part (14) of variable cross-section adapted to engage in a corresponding recess (15) formed in the lever, and into which the groove (10) opens, to constitute the bottom of the said regulable portion of the groove, the said holder piece (13) being mounted axially displaceably in relation to the support under the action of a control knob (16), to regulate the radial distance between the bottom of the said groove portion and the axis of the support.

3. Device according to Claim 2, characterised in that the holder piece (13) comprises four protruding parts disposed at 90° in relation to one another and intended to co-operate with four corresponding recesses of the lever (8).

4. Device according to Claim 2 or 3, characterised in that the said control knob (16) is movable in rotation in relation to the support (2, 6) and in that the said holder piece (13) comprises at least one threaded portion (13a) adapted to co-operate with a tapped portion (16a) of the control knob (16), for the purpose of its displacement in relation to the groove (10) of the lever (8).

5. Device according to any one of Claims 2 to 4, characterised in that second indexing means (17) are provided between the control knob and the lever.

6. Device according to any one of the preceding Claims, characterised in that the first indexing means (11) comprise at least one ball (18) disposed in a groove (6a) of the support (2, 6), parallel with the axis (X-X) of the latter, thrust by elastic means (19) in the direction of the holder piece (13) and adapted to co-operate with corresponding grooves (13b) of the latter in order to determine the indexed positions of the lever (8) in relation to the support (2, 6).

7. Device according to Claim 6, characterised in that the said first indexing means (11) comprise two diametrically opposite balls.

8. Device according to Claim 6 or 7, characterised in that one of the extremities of the or of each elastic means (19) is in abutment on a washer (20) which is displaceable parallel with the axis (X-X) of the support (2, 6) and itself in abutment against a bearing surface (16b) of the control knob, and the other extremity, on the or each ball (18), and in that the wall (6c) of the or each groove (6a) of the support, opposed to the elastic means (19), presents itself in the form of a ramp for guidance of the ball (18) towards the holder piece.

9. Device according to any one of Claims 5 to 8, characterised in that the said second indexing means (17) comprise a washer (21) disposed between the lever (8) and the control knob (16) fast in rotation with the lever, and comprising at least one elastic boss (22) adapted to cooperate with corresponding recesses (23) of the control knob (16), in order to determine indexed positions of the control knob in relation to the lever, and thus precise positions of the holder piece in relation to the groove of the lever.

10. Device according to any one of Claims 2 to 9, characterised in that the or each projecting part (14) of the holder piece (13) is present in the form of a ramp.

11. Device according to any one of Claims 6 to 10, characterised in that the support comprises a stud (2) fast with the said part (1) of the frame or handle-bar of the cycle and on which an intermediate element (6) is fixed in which the or each groove (6a) of the support is formed.

FIG.1a

FIG.1b

FIG.2